# EUROPÄISCHE PATENTSCHRIFT

(11) **EP 0 669 509 B1**
(45) Veröffentlichungstag und Bekanntmachung des Hinweises auf die Patenterteilung: **28.06.2000**
(21) Anmeldenummer: 95101845.6
(22) Anmeldetag: 10.02.1995
(51) Int. Cl.: F25J 3/02, C01B 23/00

(54) **Verfahren und Vorrichtung zur Gewinnung von reinem Argon**
Process and apparatus for obtaining pure argon
Procédé et appareil permettant d'obtenir d l'argon pur

(30) Priorität: 24.02.1994 DE 4406049; 24.02.1994 DE 4406069
(43) Veröffentlichungstag der Anmeldung: 30.08.1995
(73) Patentinhaber: Linde Aktiengesellschaft, 65189 Wiesbaden (DE)
(72) Erfinder: Rohde, Wilhelm, Dipl.-Ing., D-81476 München (DE); Corduan, Horst, Dipl.-Ing., D-82178 Puchheim (DE)
(74) Vertreter: Kasseckert, Rainer

(56) Entgegenhaltungen:
- EP-B- 0 377 117
- PATENT ABSTRACTS OF JAPAN vol. 17, no. 517 (M-1481) 17. September 1993 & JP-A-05 133 682 (NIPPON SANSO KK) 28. Mai 1993

## Beschreibung

Die Erfindung betrifft ein Verfahren und eine Vorrichtung zur Gewinnung von reinem Argon, bei denen Luft in einem Rektifiziersystem mit mindestens einer Luftzerlegersäule und einer Reinargonsäule zerlegt wird, wobei ein argonangereichertes Gemisch aus Luftgasen in die Reinargonsäule eingeführt wird und aus dem unteren Bereich der Reinargonsäule ein im wesentlichen stickstofffreies Argonprodukt abgezogen wird und der untere Bereich der Reinargonsäule durch indirekten Wärmeaustausch beheizt wird.

Die Grundlagen der Reinargongewinnung sind in Hausen/Linde, Tieftemperaturtechnik, 2. Auflage 1985, Seiten 332 bis 334 beschrieben. Verfahren und Vorrichtungen der eingangs genannten Art sind außerdem aus den Patentveröffentlichungen EP-B-377117, EP-A-171711 und EP-A-331028 bekannt. Dabei wird die Luftzerlegung im engeren Sinne in der Regel in einer Doppelsäule vorgenommen, aus deren Niederdruckteil die Einsatzfraktion für eine Rohargonsäule entnommen wird. Das sauerstoffabgereicherte Rohargon wird in einer weiteren Rektifiziersäule, der Reinargonsäule, von leichterflüchtigen Verunreinigungen, insbesondere von Stickstoff befreit. Zwischen Rohargon- und Reinargonsäule kann gegebenenfalls eine weitere Stufe zur Sauerstoffentfernung, beispielsweise durch katalytische Oxidation mit Wasserstoff (Deoxo-Vorrichtung, siehe z.B. EP-A-171711 oder EP-A-331028) geschaltet sein. Die Erfindung ist jedoch nicht grundsätzlich an die übliche Reihenfolge der Argonreinigung (Sauerstoffentfernung vor Stickstoffentfernung) gebunden. Die geläufigen Begriffe Rohargonsäule (im Sinne einer Säule zur Entfernung von Sauerstoff) und Reinargonsäule (im Sinne einer Trennung zwischen Argon und Stickstoff) werden hier verwendet ohne daß dadurch diese Reihenfolge festgelegt wäre.

Um die Rektifikation in der Reinargonsäule zu betreiben, muß sowohl im oberen Bereich der Säule (üblicherweise am Kopf) als auch in ihrem unteren Bereich (üblicherweise im Sumpf) Wärme mit der Umgebung ausgetauscht werden. Mit einer Kopfkühlung wird Wärme abgeführt, um flüssigen Rücklauf zu erzeugen; dabei wird die Kopffraktion der Reinargonsäule mindestens teilweise durch indirekten Wärmeaustausch mit einem verdampfenden Kühlmedium verflüssigt und das bei dem indirekten Wärmeaustausch entstandene Kondensat in die Reinargonsäule zurückgeleitet. Eine Sumpfheizung führt Wärme ein, um aufsteigenden Dampf zu gewinnen, indem eine flüssige Fraktion aus dem unteren Bereich der Reinargonsäule in indirekten Wärmeaustausch mit einem Heizmedium gebracht wird.

Die Kopfkühlung der Reinargonsäule geschieht üblicherweise durch indirekten Wärmeaustausch mit flüssigem Stickstoff aus der Drucksäule des Luftzerlegers im engeren Sinne. Damit steht ein Kühlmedium zur Verfügung, mit dem sich denkbar niedrige Temperaturen erreichen lassen. Die Kondensation der stickstoffreichen Restfraktion am Kopf der Reinargonsäule ist daher kein Problem.

Allerdings können sich - mitunter beträchtliche - Schwierigkeiten im Falle von Betriebsstörungen oder Bedienungsfehlem ergeben. Falls nämlich in einer derartigen Situation der Argongehalt am Kopf der Reinargonsäule ansteigt, kann unter Umständen festes Argon ausfallen, den Kopfkondensator verstopfen und damit beträchtliche Kosten verursachen. Man hat bisher versucht, diese Gefahr durch Steuer- und Regelvorrichtungen zu bannen, die dafür sorgen sollen, daß die Temperatur am Kopf der Reinargonsäule nicht unter den Schmelzpunkt des Argons fällt. Solche Einrichtungen sind jedoch nicht vollständig zufriedenstellend, sie erfordern insbesondere einen hohen Aufwand.

Die Beheizung des unteren Bereichs der Reinargonsäule wird üblicherweise durch indirekten Wärmeaustausch mit einer kondensierenden gasförmigen Fraktion bewirkt, beispielsweise von gasförmigem Stickstoff aus der Drucksäule des Luftzerlegers im engeren Sinne. Dabei wird das Heizmedium in der Regel mindestens teilweise verflüssigt. Um dieses Kondensat als Flüssigkeit sinnvoll weiteterverwenden zu können (etwa als Rücklauf für eine Trennsäule oder als Kühlmittel in einem KondensatorVerdampfer), muß im Falle der nur partiellen Kondensation in der Sumpfheizung der Reinargonsäule ein Abscheider zwischengeschaltet werden, oder es muß durch entsprechende Regelungsvorrichtungen dafür gesorgt werden, daß genau die Menge an Heizmedium, die zur Beheizung des Sumpfes der Reinargonsäule notwendig ist, durch den Sumpfverdampfer geführt wird und dabei im wesentlichen vollständig kondensiert. Beides ist mit relativ hohem Aufwand verbunden.

Der Erfindung liegt daher die Aufgabe zugrunde, das Verfahren und die Vorrichtung der eingangs genannten Art kostengünstiger zu gestalten, insbesondere durch eine besonders günstige Ausführung des Wärmeaustauschs der Reinargonsäule mit anderen Prozeßströmen.

Diese Aufgabe wird dadurch gelöst, daß der untere Bereich der Reinargonsäule durch indirekten Wärmeaustausch mit einem Heizmedium beheizt wird, das sich im flüssigen Zustand befindet.

Es wird also auf den - im allgemeinen sehr effizienten - Austausch von latenter Wärme bei der Sumpfbeheizung der Reinargonsäule verzichtet. Die Verdampfung von Flüssigkeit aus dem unteren Bereich der Reinargonsäule wird nicht durch die Verflüssigung eines gasförmigen Heizmediums bewirkt, sondern durch den Entzug von fühlbarer Wärme aus einem flüssigen Strom.

Die erwarteten Nachteile dieses Verfahrensschritts fallen dabei sehr gering aus, da nur eine relativ kleine Menge von Flüssigkeit verdampft werden muß (etwa 0,5 bis 2 %, vorzugsweise etwa 0,5 bis 1 % der Gesamtmenge der Zerlegungsluft). Der relativ große Strom an Heizmedium, der durch den Verzicht auf den Austausch latenter Wärme benötigt wird, ist daher im absoluten Maß durchaus realisierbar.

Gemäß einem weiteren Aspekt der Erfindung wird die Kopffraktion (28) der Reinargonsäule (25) mindestens teilweise durch indirekten Wärmeaustausch mit einem Kühlmedium verflüssigt, das einen Sauerstoffgehalt von mindestens 10 % aufweist, und das bei dem indirekten Wärmeaustausch (29, 21', 29'') mit dem Kühlmedium entstandene Kondensat (28a) wird in die Reinargonsäule zurückgeleitet.

Im Rahmen der Erfindung hat es sich herausgestellt, daß es ohne gravierende Einbußen an Produktqualität und -menge möglich ist, auf Stickstoff als Kühlmedium für die Reinargonsäule zu verzichten und stattdessen ein sauerstoffhaltiges Gemisch aus Luftgasen einzusetzen. Dieses kann in seiner Zusammensetzung so gewählt werden, daß es auch unter Atmosphärendruck beziehungsweise einige Zehntel Bar darüber einen Siedepunkt aufweist, der über dem Tripelpunkt von Argon liegt, aber trotzdem zur Kondensation der Kopffraktion ausreicht. Ein Ausfrieren von festem Argon ist damit grundsätzlich unmöglich; auf eine entsprechende Regelung kann vollständig verzichtet werden.

Diese Verfahrensweise gewährleistet einen sicheren Betrieb der Reinargonsäule mit vertretbaren Kosten, insbesondere mit relativ geringem Regelaufwand.

Als Kühlmedium können verschiedene flüssige Prozeßströme verwendet werden. Vorzugsweise wird das Kühlmedium aus dem unteren oder mittleren Bereich der beziehungsweise einer der Luftzerlegersäulen, insbesondere der Druckstufe einer Doppelsäule abgezogen. Besonders günstig ist der Einsatz von Sumpfflüssigkeit aus der Druckstufe als Kühlmedium für die Reinargonsäule.

Die Verwendung des bestimmten Artikels für das Kühlmedium in dieser Anmeldung bedeutet nicht, daß ausgeschlossen ist, daß andere Fraktionen ebenfalls zur Kopfkühlung der Reinargonsäule beitragen, beispielsweise indem sie stromaufwärts des indirekten Wärmeaustauschs gegen die Kopffraktion mit dem Kühlmedium vermischt werden; allerdings ist der Beitrag der hier ausdrücklich als Kühlmedium bezeichneten Fraktion der ausschlaggebende für die Erzeugung von Rücklauf am Kopf der Reinargonsäule.

Gemäß einer weiteren Ausgestaltung des erfindungsgemäßen Verfahrens wird eine argonhaltige Fraktion in eine Rohargonsäule eingeleitet und an deren Kopf sauerstoffabgereichertes Argon gewonnen, wobei ein Teil des sauerstoffabgereicherten Argons in indirektem Wärmeaustausch mit demselben Kühlmedium verflüssigt wird, das bei dem indirekten Wärmeaustausch zur teilweisen Kondensation der Kopffraktion der Reinargonsäule verwendet wird, und dieser indirekte Wärmeaustausch in einem Kondensator-Verdampfer durchgeführt wird, in dessen Verdampfungsseite das Kühlmedium eingespeist wird, gegen das auch die Kopffraktion der Reinargonsäule mindestens teilweise verflüssigt wird.

Für den (üblichen) Fall, daß eine Rohargonsäule vorhanden ist, deren Kopf ebenfalls zwecks Erzeugung von Rücklauf gekühlt werden muß, wird also gemäß diesem Aspekt der Erfindung zur Kopfkühlung von Rohargonsäule und Reinargonsäule dasselbe Kühlmedium eingesetzt, insbesondere Sumpfflüssigkeit aus der Drucksäule.

Dabei ist es verfahrenstechnisch günstig, wenn das Kühlmedium stromaufwärts der Einspeisung in den Kondensator-Verdampfer in indirekten Wärmeaustausch mit der Kopffraktion der Reinargonsäule gebracht wird. Das Kühlmedium oder eine Teil des Kühlmediums strömt also zunächst durch einen Wärmetauscher, der als Kopfkondensator der Reinargonsäule arbeitet, bevor es in den Kondensator-Verdampfer eingeleitet wird. Dabei wird im Vergleich zum RohargonsäulenKopfkondensator so wenig Kühlmedium verdampft, daß sich die Zusammensetzung des flüssigen Anteils des in den Kondensator-Verdampfer eingespeisten Kühlmediums und damit dessen Siedepunkt nicht spürbar ändert. (Dies gilt insbesondere dann, wenn gemäß einem bereits erwähnten Aspekt der Erfindung im wesentlichen die gesamte, aus der Drucksäule abgezogene Sumpfflüssigkeit durch den Kondensator-Verdampfer geleitet wird.)

Die kostengünstigste Realisierung liegt jedoch im Einsatz eines gemeinsamen Kondensator-Verdampfers für Rohargonsäule und Reinargonsäule, indem also der indirekte Wärmeaustausch zwischen dem Kühlmedium und der Kopffraktion der Reinargonsäule innerhalb des Kondensator-Verdampfers durchgeführt wird. Dazu kann beispielsweise ein Wärmetauscherblock in den Kondensator-Verdampfer eingebaut werden, der getrennte Passagen für die Kopffraktionen von Rohargonsäule und Reinargonsäule (und gegebenenfalls weitere Passagen, zum Beispiel für stickstofffreies Argonprodukt) enthält, die alle mit dem verdampfenden Kühlmedium im Wärmeaustauschbeziehung stehen.

Auf der Verdampfungsseite des Kondensator-Verdampfers entstandener Dampf des Kühlmediums kann abgezogen und der Niederdrucksäule an einer seiner Zusammensetzung entsprechenden Zwischenstelle zugeführt werden. Es steht damit weiter zur Gewinnung der in ihm enthaltenen Komponenten, insbesondere Stickstoff, Sauerstoff und Edelgasen, zur Verfügung.

Besonders günstig ist es, wenn eine größere Menge des Kühlmediums in den Kondensator-Verdampfer geleitet wird, als zur Verflüssigung der Kopffraktionen von Rohargonsäule und Reinargonsäule notwendig ist (beispielsweise ein großer Teil der aus der Drucksäule abgezogenen Sumpfflüssigkeit), und wenn flüssig verbliebenes Kühlmedium von der Verdampfungsseite des Kondensator-Verdampfers abgezogen und der Niederdrucksäule an einer seiner Zusammensetzung entsprechenden Zwischenstelle zugeführt wird.

Das flüssig verbliebene Kühlmedium wird vorzugsweise oberhalb der Stelle der Zuführung des verdampften Kühlmediums in die Niederdrucksäule eingespeist. Es weist nämlich durch den Überschuß an Kühlmedium einen relativ hohen Stickstoffgehalt im Vergleich zu einer praktisch totalen Verdampfung im Kondensator-Verdampfer auf und kann daher in einem größeren Bereich der Niederdrucksäule als Rücklauf eingesetzt werden. Dies trägt zur Verbesserung der Trennwirkung bei.

Es ist vorteilhaft, wenn im wesentlichen die gesamte im unteren Bereich der Drucksäule anfallende Sumpfflüssigkeit als Kühlmedium verwendet wird.

Das flüssig verbliebene Kühlmedium kann über eine Überlaufvorrichtung aus dem Kondensator-Verdampfer abgezogen werden.

Die Überlaufvorrichtung kann durch jedes bekannte Mittel realisiert sein, beispielsweise durch ein im Verdampfungsraum angeordnetes nach oben offenes Rohr, durch eine auf Höhe des gewünschten Flüssigkeitsspiegels angeschlossene Leitung oder durch eine siphonartige Leitung (nach unten offenes U, höchster Abschnitt in Höhe des gewünschten Flüssigkeitsspiegels).

Gemäß einer Weiterbildung des Erfindungsgedankens ist die Verdampfungsseite des Kondensator-Verdampfers durch eine Trennwand in einen ersten und einen zweiten Teilraum unterteilt, wobei die Gas- und die Flüssigkeitsräume der beiden Teilräume miteinander kommunizieren, das Kühlmedium in den ersten Teilraum eingespeist wird, der mit der Kopffraktion der Reinargonsäule in Wärmeaustauschbeziehung steht, und wobei der zweite Teilraum in Wärmeaustauschbeziehung mit dem sauerstoffabgereicherten Argon aus der Rohargonsäule steht.

Die Wärmeaustauschbeziehung kann auf verschiedene Weisen verwirklicht werden. Zum einen kann ein Wärmeaustauscher in den entsprechenden Teilraum eingebaut sein; zum anderen kann - alternativ oder zusätzlich - Flüssigkeit aus dem Teilraum zu einem außerhalb angeordneten Wärmetauscher abgeführt werden. Im Falle der ausschließlich außerhalb des Kondensator-Verdampfers durchgeführten Verflüssigung der Kopffraktion aus der Reinargonsäule kann die Wärmeaustauschbeziehung auch dadurch hergestellt werden, daß flüssiges Kühlmedium zunächst (beispielsweise außerhalb der Kondensator-Verdampfers) in indirekten Wärmeaustausch mit der Kopffraktion aus der Reinargonsäule gebracht und anschließend in den ersten Teilraum des Kondensator-Verdampfers eingeleitet wird.

Durch die Aufteilung des Verdampfungsraums kann sich trotz der kostengünstigen Verwendung eines gemeinsamen Kondensator-Verdampfers in dem zweiten Teilraum die gleiche, erhöhte Sauerstoffkonzentration einstellen, wie sie sich in einem für sich betriebenen Rohargonkondensator ergeben würde. Im ersten Teilraum stellt sich dagegen eine gegenüber der ursprünglichen Zusammensetzung des Kühlmediums nur unwesentlich veränderte Konzentration ein. Der Siedepunkt der Flüssigkeit im ersten Teilraum ist also niedriger als im zweiten Teilraum. Somit ist der kostengünstige gemeinsame Kondensator-Verdampfer ohne jede äußere Regelung an die unterschiedlichen Temperaturen von Rohargonsäule und Reinargonsäule angepaßt.

Das flüssig verbliebene Kühlmedium kann aus dem ersten Teilraum des Kondensator-Verdampfers abgezogen werden, also mit einem relativ hohen Stickstoffgehalt. Dadurch ist eine Einspeisung an relativ hoher Stelle in die Niederdrucksäule und ein entsprechend hoher Beitrag zur Trennwirkung möglich.

Es ist besonders günstig, bei der Sumpfbeheizung der Reinargonsäule unterkühltes Heizmedium anschließend zur Kopfkühlung der Reinargonsäule und/oder der Rohargonsäule einzusetzen. Als Heizmedium kann bei der erfindungsgemäße Sumpfheizung der Reinargonsäule beispielsweise jede Fraktion verwendet werden, die unter hohem Druck vorliegt, etwa jede Fraktion aus der Drucksäule einer Doppelsäule, die bei der Entnahme flüssig anfällt oder nach der Entnahme aus der Doppelsäule und vor ihrem Einsatz als Heizmedium verflüssigt wird. Vorzugsweise wird das Heizmedium aus dem unteren oder mittleren Bereich der beziehungsweise einer der Luftzerlegersäulen abgezogen, im Falle eines Doppelsäulen-Luftzerlegers insbesondere der Druckstufe einer Doppelsäule. Besonders günstig ist der Einsatz von Sumpfflüssigkeit aus der Druckstufe als Heizmedium für die Reinargonsäule. Vorteilhafterweise bildet im wesentlichen die gesamte im unteren Bereich der Drucksäule anfallende Sumpfflüssigkeit das Heizmedium.

Dadurch reicht eine einzige Leitung aus, um Sumpfflüssigkeit aus der Drucksäule herauszuführen, die Sumpfheizung der Reinargonsäule mit Heizmedium zu versorgen und dieses - gegebenenfalls mit weiteren Zwischenschritten - zur weiteren Rektifikation in die Niederdrucksäule zu führen. Eine eigene Leitung für das Heizmedium der Reinargonsäule ist nicht erforderlich, insbesondere entfallen Regelungseinrichtungen für eine entsprechende Aufteilung der als Heizmedium verwendeten Fraktion.

Die Erfindung betrifft auch eine Vorrichtung gemäß Patentanspruch 22 oder 23 zur Durchführung des beschriebenen Verfahrens.

Die Erfindung sowie weitere Einzelheiten der Erfindung werden im folgenden anhand von in den Zeichnungen schematisch dargestellten Ausführungsbeispielen näher erläutert. Hierbei zeigen:
- Figur 1: eine bevorzugte Ausführungsform der Erfindung,
- Figur 2: den Kondensator-Verdampfer von Figur 1 im Detail,
- Figur 3: ein zweites und
- Figur 4: ein drittes Verfahren, sowie

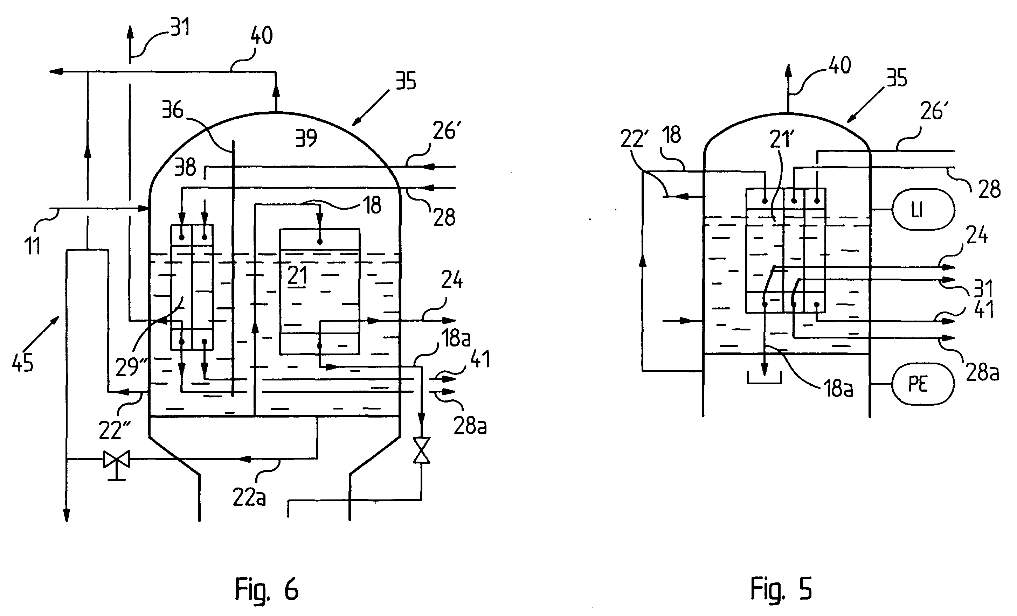

- Figur 5 und Figur 6: die Kondensator-Verdampfer der Figuren 3 bzw. 4 im Detail.

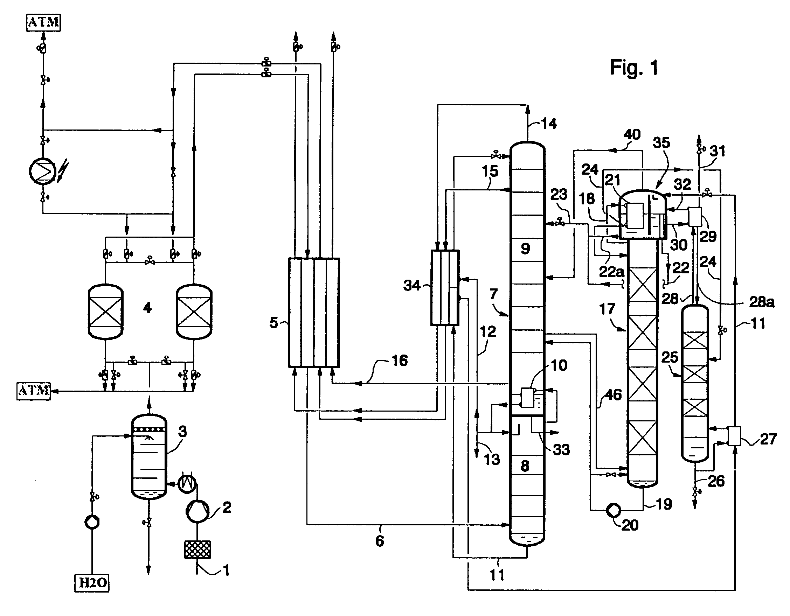

In Figur 1 ist das gesamte Luftzerlegungsverfahren dargestellt. Atmosphärische Luft wird bei 1 angesaugt, im Luftverdichter 2 komprimiert, vorgekühlt (3), in einer Molsiebstation 4 von Kohlendioxid und Wasserdampf befreit im Hauptwärmetauscher 5 auf etwa Taupunkt abgekühlt und schließlich über Leitung 6 in die Druckstufe 8 einer Doppelsäule 7 eingeführt. Druckstufe 8 und Niederdruckstufe 9 der Doppelsäule 7 stehen über einen Hauptkondensator 10 in wärmetauschender Verbindung. Sumpfflüssigkeit 11, 23 und flüssiger Stickstoff 12 aus der Drucksäule 8 werden mindestens zum Teil in die Niederdrucksäule 9 eingedrosselt. Die gasförmigen Produkte der Niederdrucksäule, reiner Stickstoff 14, unreiner Stickstoff 15 und gasförmiger Sauerstoff 16, werden im Hauptwärmetauscher 5 gegen zu zerlegende Luft auf etwa Umgebungstemperatur angewärmt Falls gewünscht, können auch Flüssigprodukte gewonnen werden: Stickstoff über Leitung 13 und/oder Sauerstoff 33 vom Sumpf der Niederdrucksäule 9. Insbesondere in diesem Fall wird in der Regel Kälte durch arbeitsleistende Entspannung von Prozeßströmen erzeugt, beispielsweise in einem mit Luft oder Stickstoff betriebenen Kältekreislauf mit einer, zwei oder mehr Entspannungsturbinen oder durch arbeitsleistende Entspannung von Luft auf etwa Niederdrucksäulenniveau und Direkteinspeisung der Luft in die Niederdrucksäule.

An einer Zwischenstelle der Niederdrucksäule 9 wird eine argonhaltige Sauerstofffraktion 46 abgezogen und in einer Rohargonsäule 17 in am Kopf der Säule anfallendes Rohargon 18 und eine Restflüssigkeit 19 zerlegt, die - gegebenenfalls mit Hilfe einer Pumpe 20- in die Niederdrucksäule zurückgespeist wird. Sauerstoffabgereichertes Argon (Rohargon) wird über Leitung 24 vorzugsweise in flüssigem Zustand abgezogen und als argonangereichertes Gemisch in die Reinargonsäule 25 eingespeist. Die Rohargonfraktion 24 enthält noch etwa 0,1 bis 1000 ppm, vorzugsweise weniger als 10 ppm, höchst vorzugsweise weniger als 1 ppm schwererflüchtige Komponenten (vor allem Sauerstoff) und etwa 0,1 bis 5 %, vorzugsweise 0,5 bis 1 % leichterflüchtige Verunreinigungen (insbesondere Stickstoff).

Vom Sumpf der Reinargonsäule 25 wird das Reinargonprodukt 26- vorzugsweise in flüssigem Zustand - abgezogen. Das Reinargonprodukt 26 weist an Verunreinigungen noch 0,1 bis 1000 ppm, vorzugsweise weniger als etwa 1 ppm Sauerstoff und 0,05 bis 100 ppm, vorzugsweise etwa 1 ppm Stickstoff oder weniger auf. Ein Teil der in der Reinargonsäule anfallenden Kopffraktion 28, die zu 20 bis 80 %, vorzugsweise etwa 40 bis 60 % aus Stickstoff besteht, wird als Restgas 31 abgeführt. Letzteres kann beispielsweise in die Atmosphäre abgelassen oder einem anderen Reststrom, zum Beispiel dem Unrein-Stickstoffstrom 15 aus der Niederdrucksäule 9, zugespeist werden.

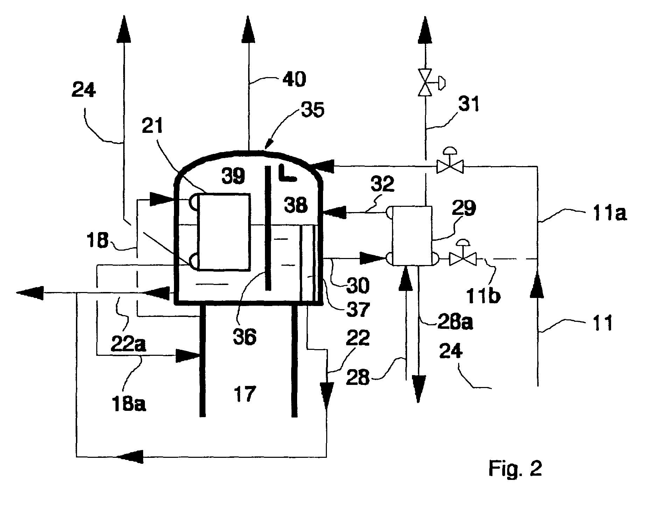

Die Kopfkühlung der Rohargonsäule erfolgt in einem Kondensator-Verdampfer 35, in den im wesentlichen die gesamte Sumpfflüssigkeit aus der Drucksäule 8 eingeleitet wird. (Kleinere Anteile der Sumpffraktion der Drucksäule können auf anderem Weg entnommen werden, beispielsweise über einen Sicherheitsablaß.) Die Drucksäulenflüssigkeit wird über eine Leitung 11, die durch einen Unterkühlungsgegenströmer 34 und einen weiteren Wärmetauscher 27 führt, in den Verdampfungsraum des Kondensator-Verdampfers 35 eingespeist. (Der genaue Aufbau des Kondensator-Verdampfers wird unten anhand der Figur 2 erläutert.) Gasförmiges Rohargon vom Kopf der Rohargonsäule 17 wird über Leitung 18 durch einen Wärmetauscher 21 geleite, der im Flüssigkeitsbad des Kondensator-Verdampfers angeordnet ist. Ein Teil des im Wärmetauscher 21 gebildeten Kondensats wird als Rücklauf auf die Rohargonsäule aufgegeben, ein anderer Teil als Zwischenprodukt 24 abgeführt.

Über Leitung 30 strömt Flüssigkeit (ein Anteil von 1 bis 10 %, vorzugsweise 2 bis 6 % der gesamten über Leitung 11 herangeführten Menge an Kühlmedium) zu einem weiteren Wärmetauscher 29, der als Kopfkondensator für die Reinargonsäule 25 dient. Das im Wärmetauscher 29 verdampfte Kühlmedium kann über Leitung 32 in den Verdampfungsraum des Kondensator-Verdampfers 35 zurückgespeist werden. Über Leitung 28 tritt die Kopffraktion der Reinargonsäule in indirekten Wärmeaustausch mit dem Kühlmedium. Dabei gebildetes Kondensat strömt über die Verbindung 28a wieder in die Reinargonsäule 25 zurück. Der gasförmig verbleibende Rest wird bei 31 abgezogen.

Der Wärmetauscher 27 dient zum Eintrag von Wärme in den unteren Bereich der Reinargonsäule 25. Dort wird ein Teil der Sumpfflüssigkeit aus der Reinargonsäule im indirekten Wärmeaustausch mit der flüssige, unter einem Druck von beispielsweise 1 bis 3 bar, vorzugsweise 1,2 bis 2,0 bar stehende Sumpffraktion 11 aus der Drucksäule 8 verdampft. Das Heizmedium 11 wird dabei unterkühlt. Das unterkühlte Heizmedium 11a wird im folgenden wie oben beschrieben als Kühlmedium für die Erzeugung von Rücklauf für Rohargon- und Reinargonsäule verwendet.

Anhand von Figur 2 wird der Aufbau des Kondensator-Verdampfers 35 im einzelnen erläutert. Die Trennwand 36 bewirkt eine Aufteilung in einen ersten Teilraum 38 und einen zweiten Teilraum 39. Die Flüssigkeits- und Gasräume der beiden Teilräume 38, 39 kommunizieren miteinander, wie in der Zeichnung durch die Zwischenräume zwischen der Trennwand 36 einerseits und dem Boden beziehungsweise dem Deckel des Kondensator-Verdampfers 35 andererseits angedeutet ist. Es besteht daher ein beschränkte Möglichkeit zum Austausch von Flüssigkeit und Dampf, allerdings stehen die beiden Teilräume nicht im thermodynamischen Gleichgewicht.

Sumpfflüssigkeit 11 aus der Drucksäule wird in einer ersten Variante über Leitung 11a in den ersten Teilraum 38 eingedrosselt. Ein Teil des dabei flüssig verbliebenen Anteils wird über Leitung 30 zum Wärmetauscher 29 geführt, der außerhalb des Kondensator-Verdampfers 35 angeordnet ist, und dort gegen die kondensierende Kopffraktion 28 aus der Reinargonsäule 25 verdampft. Dabei entstandenes Gas wird über die Verbindung 32 wieder in den ersten Teilraum 38 des Kondensator-Verdampfers 35 zurückgeleitet.

Alternativ oder zusätzlich kann Sumpfflüssigkeit aus Leitung 11 direkt in den Wärmetauscher 29 eingespeist werden, wie durch die gestrichelt dargestellte Leitung 11b angedeutet ist. Falls die gesamte Sumpfflüssigkeit auf diesem Weg geführt wird, können die Leitungen 11a und 30 entfallen. In einer dritten Variante, die in Figur 2 nicht dargestellt ist, ist der Wärmetauscher 29 im Flüssigkeitsraum der Kondensator-Verdampfers 35, vorzugsweise im ersten Teilraum 38 angeordnet. Dabei kann auf die Zu- und Ableitungen 30, 32, 11b für die Verdampfungsseite verzichtet werden.

Im Wärmetauscher wird Kopfgas in einer Menge kondensiert, die 0,5 bis 8 %, vorzugsweise etwa 1 bis 4 % der Luftmenge entspricht. Dadurch wird nur ein kleiner Teil der Sumpfflüssigkeit aus der Drucksäule verdampft. Dadurch steht die Flüssigkeit im ersten Teilraum 38 fast im Gleichgewicht mit der über Leitung 11a eingedrosselten Fraktion, weist also einen relativ hohen Stickstoffgehalt (60 bis 70 %)und damit eine entsprechend niedrige Verdampfungstemperatur auf. Umgekehrt ist diese Temperatur so hoch, daß auch im ungünstigsten Fall (sehr hohe Argonkonzentration am Kopf der Reinargonsäule) kein festes Argon entstehen kann, so daß keinerlei Regelaufwand erforderlich ist Dadurch kann die Kondensation des Kopfgases 28 der Reinargonsäule besonders effektiv durchgeführt werden.

Im Flüssigkeitsbad des zweiten Teilraums 39 ist ein weiterer Wärmetauscher 21 angeordnet, der als Kopf- und Produktkondensator für die Rohargonsäule 17 dient, mit der er über die Kopfproduktleitung 18 und die Rücklaufleitung 18a verbunden ist. Der am Wärmetauscher 21 erzeugte Dampf wird über Leitung 40 aus dem zweiten Teilraum 39 abgezogen; die entsprechende Flüssigkeitsmenge strömt im Wege des Druckausgleichs mit dem kommunizierenden ersten Teilraum 38 von dort nach.

Der Wärmeumsatz am Verdampfer 21 ist 10 bis 40, vorzugsweise etwa 15 bis 25-mal höher als derjenige am Wärmetauscher 29. Damit stellt sich dort eine niedrigere Stickstoffkonzentration (25 bis 40 %) ein, die jedoch zur Kopfkühlung der Rohargonsäule ausreicht.

Überschüssige Flüssigkeit fließt über eine Überlaufvorrichtung 37 ab, die im Beispiel der Figur 2 durch ein im Verdampfungsraum der Kondensator-Verdampfers 35 angeordnetes nach oben offenes Rohr realisiert ist. Die Überlaufvorrichtung 37 ist vorzugsweise im ersten Teilraum angeordnet. Wegen der dort herrschenden Stickstoffkonzentration kann die über Leitung 22 abgezogene Flüssigkeit an einer relativ weit oben liegenden Zwischenstelle in die Niederdrucksäule 9 eingespeist werden und damit stärker zur Verbesserung der Rektifizierwirkung der Niederdrucksäule beitragen, als es die Flüssigkeit aus dem zweiten Teilraum 39 könnte. (Die Leitung 22a dient lediglich zur Spülung des Kondensator-Verdampfers 35. Aus ihr werden gegebenenfalls kleine Flüssigkeitsmengen abgezogen, um eine Anreicherung von schwererflüchtigen Komponenten im Flüssigkeitsbad des Kondensator-Verdampfers 35 zu verhindern.

Die gesamte Anordnung regelt sich selbsttätig, und zwar auch dann, wenn die gesamte Sumpfflüssigkeit aus der Drucksäule 8 durch den Kondensator-Verdampfer 35 geleitet wird. Der Wärmetauscher 29 saugt über Leitung 30 die benötigte Flüssigkeitsmenge an, ebenso der Wärmetauscher 21 über die Verbindung der Flüssigkeitsbereiche der beiden Teilräume 38, 39. Die Überlaufvorrichtung 37 sorgt für einen gleichbleibenden Flüssigkeitsstand, ohne daß hierfür Regel- oder Steuereinrichtungen notwendig werden. Die überschüssige Flüssigkeit strömt bei entsprechender geodätischer Anordnung mit Hilfe des hydrostatischen Druckes über Leitung 22 zur Niederdrucksäule.

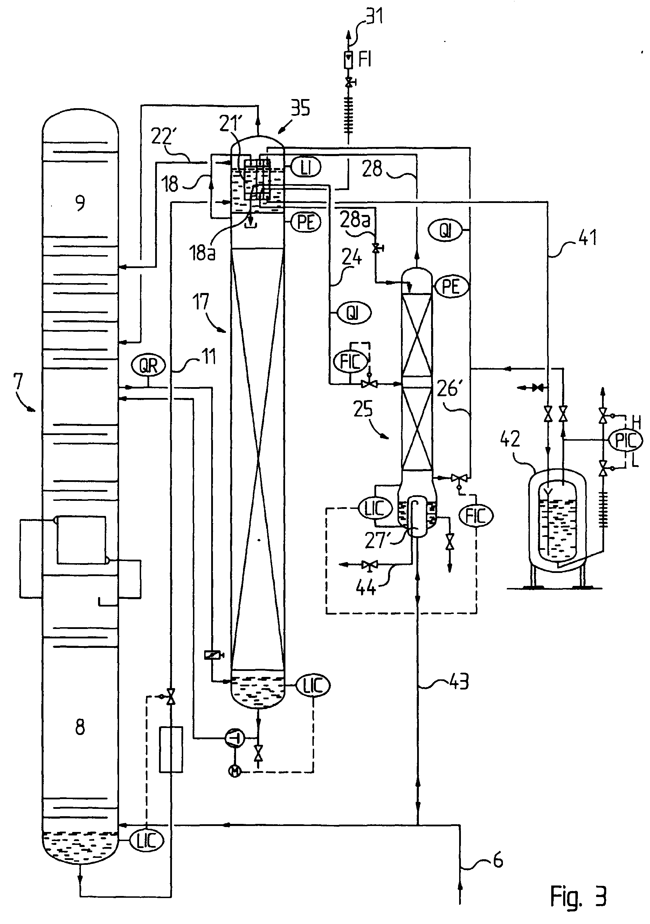

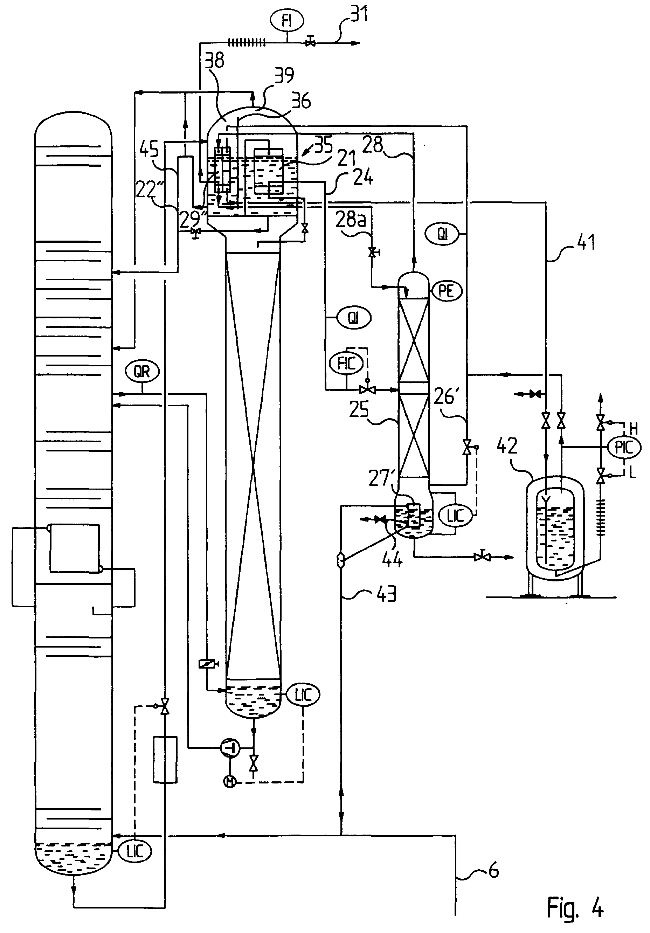

In den Figuren 3 und 4 ist die Luftzerlegung im engeren Sinne nur angedeutet. Die nicht dargestellten Verfahrensschritte vor und um die Doppelsäule 7 entsprechen denjenigen von Figur 1. Die übrigen Verfahrensschritte und Vorrichtungsteile sind mit denselben Bezugszeichen wie in Figur 1 versehen, soweit sie dort eine Entsprechung finden.

Figur 3 zeigt einen abgewandelten Aufbau des Kondensator-Verdampfers 35 ohne Aufteilung in Teilräume. Die Funktionen der Wärmetauscher 21 und 29 von Figur 1 werden hier durch einen gemeinsamen Wärmetauscherblock 21' ausgeführt: Links befinden sich Passagen für Rohargon 18, in der Mitte für Kopfgas 28 aus der Reinargonsäule 25. Zusätzlich sind rechts Passagen zu Verflüssigung und/oder Unterkühlung des - hier gasförmig über Leitung 26' abgezogenen - Reinargonprodukts vorgesehen. (Selbstverständlich können auch Verfahren und Vorrichtung von Figur 1 entsprechend abgewandelt werden, etwa durch zusätzliche Passagen im Wärmetauscher 29 oder 21 oder durch einen weiteren Wärmetauscherblock im Kondensator-Verdampfer 35, insbesondere im ersten Teilraum 38.) Die Überlaufvorrichtung ist hier durch eine Anordnung des Anschlusses der Flüssigkeitsleitung 22' in Höhe des gewünschten Flüssigkeitsspiegels realisiert Die Spülleitung (22a in Figur 1) ist hier nicht eingezeichnet

Darüber hinaus ist in Figur 3 ein Flüssigtank 42 dargestellt, in den das verflüssigte beziehungsweise unterkühlte Reinargonprodukt 41 eingeführt wird. Die Steuer- und Regeleinrichtungen sind explizit angegeben. dabei bedeuten:
- LI: Flüssigkeitsstandmessung (liquid indication)
- LIC: Flüssigkeitsstandmessung und -regelung (liquid indication and control)
- FIC: Durchstrommessung und -einstellung (flow indication and control)
- PE: Druckmeßstutzen (nozzle for pressure indication)
- QR: Analysen-Schreiber (recorder for analyzing)

Außerdem sind weitere, in Figur 1 nicht dargestellte Einzelheiten, beispielsweise Entleerungsleitungen am unteren Ende von Rohargonsäule und Reinargonsäule gezeigt.

Die Sumpfheizung 27' der Reinargonsäule 25 wird in diesem Ausführungsbeispiel durch mit einem Teil der gereinigten und gekühlten Zerlegungsluft 6 betrieben, die über eine Leitung 43 herangeführt wird. Im indirekten Wärmeaustausch mit verdampfendem Reinargon im Sumpf der Reinargonsäule 25 kondensierte Luft strömt über dieselbe Leitung 43 wieder zurück und wird mit der übrigen zu zerlegenden Luft in die Drucksäule 8 eingespeist. Eine Ablaßleitung 44 verhindert die Verstopfung der Sumpfheizung 27 durch nichtkondensierbare Komponenten, insbesondere Helium und Neon. Da die Luft bei dem indirekten Wärmeaustausch in der Sumpfheizung 27' der Reinargonsäule kondensiert, stellen die in den Figuren 3 und 4 dargestellten Prozesse und Anlagen keine Ausführungsform der beanspruchten Erfindung dar.

Das Verfahren der Figur 4 unterscheidet sich gegenüber Figur 3 im wesentlichen durch eine abgewandelte Ausführung des Kondensator-Verdampfers 35. Er weist, ähnlich wie derjenige der Figur 1, eine Trennwand 36 auf, die zwischen einem ersten Teilraum 38 und einem zweiten Teilraum 39 angeordnet ist und ein Überströmen von Flüssigkeit sowie den Druckausgleich im Dampfraum ermöglicht. Der Wärmetauscher 29'' für das Kopfgas 28 der Reinargonsäule 25 ist hier innerhalb des ersten Teilraums 38 des Kondensator-Verdampfers 35 angeordnet und enthält außerdem Passagen zur Kondensation/Unterkühlung von des Reinargonprodukts 26'. Die Leitung 22'' zur Abführung von Flüssigkeit aus dem Verdampfungsteil des Kondensator-Verdampfers 35 ist unterhalb des Flüssigkeitsspiegels angeordnet. Ein siphonartiger gekrümmter Ast 45, dessen oberes Ende sich auf der Höhe des Flüssigkeitsspiegels befindet, sorgt für einen gleichbleibenden Flüssigkeitsstand im Kondensator-Verdampfer 35.

## Patentansprüche

1. Verfahren zur Gewinnung von reinem Argon, bei dem Luft in einem Rektifiziersystem mit mindestens einer Luftzerlegersäule (9) und einer Reinargonsäule (25) zerlegt wird, wobei ein argonangereichertes Gemisch (24) aus Luftgasen in die Reinargonsäule (25) eingeführt wird, aus dem unteren Bereich der Reinargonsäule (25) ein im wesentlichen stickstofffreies Argonprodukt (26) abgezogen wird und der untere Bereich der Reinargonsäule (25) durch indirekten Wärmeaustausch (27) beheizt wird, **dadurch gekennzeichnet**, daß der indirekte Wärmeaustausch (27) mit einem Heizmedium (11) durchgeführt wird, das sich im flüssigen Zustand befindet.

2. Verfahren nach Anspruch 1, **dadurch gekennzeichnet**, daß die Kopffraktion (28) der Reinargonsäule (25) mindestens teilweise durch indirekten Wärmeaustausch (29, 21', 29'') mit einem verdampfenden Kühlmedium (11, 11b, 30), das einen Sauerstoffgehalt von mindestens 10 % aufweist, verflüssigt wird und das bei dem indirekten Wärmeaustausch (29, 21', 29'') mit dem Kühlmedium entstandene Kondensat (28a) in die Reinargonsäule zurückgeleitet wird.

3. Verfahren nach Anspruch 2, **dadurch gekennzeichnet**, daß das Kühlmedium (11) aus dem unteren oder mittleren Bereich der beziehungsweise einer der Luftzerlegersäulen (9) abgezogen wird.

4. Verfahren nach Anspruch 3, **dadurch gekennzeichnet**, daß das Rektifiziersystem eine aus einer Drucksäule (8) und aus einer Niederdrucksäule (9) bestehende Doppelsäule (7) aufweist, wobei das Kühlmedium aus dem unteren oder mittleren Bereich der Drucksäule (8) abgezogen wird.

5. Verfahren nach Anspruch 4, **dadurch gekennzeichnet**, daß im unteren Bereich der Drucksäule (8) anfallende Sumpfflüssigkeit (11) als Kühlmedium verwendet wird.

6. Verfahren nach einem der Ansprüche 2 bis 5, **dadurch gekennzeichnet**, daß eine argonhaltige Fraktion in eine Rohargonsäule (17) eingeleitet und an deren Kopf sauerstoffabgereichertes Argon (18) gewonnen wird, wobei ein Teil des sauerstoffabgereicherten Argons (18) in indirektem Wärmeaustausch (21, 21') mit demselben Kühlmedium (11) verflüssigt wird, das bei dem indirekten Wärmeaustausch (29, 21', 29'') zur teilweisen Kondensation der Kopffraktion (28) der Reinargonsäule (25) verwendet wird, und wobei dieser indirekte Wärmeaustausch (21, 21') in einem Kondensator-Verdampfer (35) durchgeführt wird, in dessen Verdampfungsseite das Kühlmedium (11) eingespeist wird, gegen das auch die Kopffraktion (28) der Reinargonsäule (25) mindestens teilweise verflüssigt wird.

7. Verfahren nach Anspruch 6, **dadurch gekennzeichnet**, daß das Kühlmedium (11b) stromaufwärts der Einspeisung in den Kondensator-Verdampfer (35) in indirekten Wärmeaustausch (29) mit der Kopffraktion (28) der Reinargonsäule (25) gebracht wird.

8. Verfahren nach Anspruch 6 oder 7, **dadurch gekennzeichnet**, daß der indirekte Wärmeaustausch (21', 29'') zwischen dem Kühlmedium (11) und der Kopffraktion (28) der Reinargonsäule (25) innerhalb des Kondensator-Verdampfers (35) durchgeführt wird.

9. Verfahren nach Anspruch 4 und nach einem der Ansprüche 6 bis 8, **dadurch gekennzeichnet**, daß verdampftes Kühlmedium (40) von der Verdampfungsseite des Kondensator-Verdampfers (35) abgezogen und der Niederdrucksäule (9) an einer seiner Zusammensetzung entsprechenden Zwischenstelle zugeführt wird.

10. Verfahren nach Anspruch 4 und nach einem der Ansprüche 6 bis 9, **dadurch gekennzeichnet**, daß eine größere Menge des Kühlmediums (11) in den Kondensator-Verdampfer geleitet wird, als zur Verflüssigung der Kopffraktionen (18, 28) von Rohargonsäule (17) und Reinargonsäule (25) notwendig ist, und daß flüssig verbliebenes Kühlmedium (22, 22', 22'') von der Verdampfungsseite des Kondensator-Verdampfers (35) abgezogen und der Niederdrucksäule (9) an einer seiner Zusammensetzung entsprechenden Zwischenstelle zugeführt wird.

11. Verfahren nach Anspruch 9 und 10, **dadurch gekennzeichnet**, daß das flüssig verbliebene Kühlmedium (22, 22', 22'') oberhalb der Stelle der Zuführung des verdampften Kühlmediums (40) in die Niederdrucksäule (9) eingespeist wird.

12. Verfahren nach Anspruch 10 oder 11, **dadurch gekennzeichnet**, daß im wesentlichen die gesamte im unteren Bereich der Drucksäule (8) anfallende Sumpfflüssigkeit als Kühlmedium (11) verwendet wird.

13. Verfahren nach einem der Ansprüche 10 bis 12, **dadurch gekennzeichnet**, daß das flüssig verbliebene Kühlmedium (22, 22', 22'') über eine Überlaufvorrichtung (37, 22', 45) abgezogen wird.

14. Verfahren nach einem der Ansprüche 6 bis 13, **dadurch gekennzeichnet**, daß die Verdampfungsseite des Kondensator-Verdampfers (35) durch eine Trennwand (36) in einen ersten (38) und einen zweiten (39) Teilraum unterteilt ist, wobei die Gas- und die Flüssigkeitsräume der beiden Teilräume (38, 39) miteinander kommunizieren, das Kühlmedium (11, 11a) in den ersten Teilraum (38) eingespeist wird, der mit der Kopffraktion (28) der Reinargonsäule (25) in Wärmeaustauschbeziehung (29, 29'') steht, und wobei der zweite Teilraum (39) in Wärmeaustauschbeziehung (21) mit dem sauerstoffabgereicherten Argon (18) aus der Rohargonsäule (17) steht.

15. Verfahren nach Anspruch 14, **dadurch gekennzeichnet**, daß das flüssig verbliebene Kühlmedium (22, 22'') aus dem ersten Teilraum (38) des Kondensator-Verdampfers (35) abgezogen wird.

16. Verfahren nach einem der Ansprüche 1 bis 15, **dadurch gekennzeichnet**, daß das Heizmedium (11a) stromabwärts des indirekten Wärmeaustauschs (27) zur Beheizung des unteren Bereichs der Reinargonsäule (25) mindestens zum Teil in indirekten Wärmeaustausch (29) mit einer gasförmigen Fraktion (28) vom Kopf der Reinargonsäule (25) gebracht wird.

17. Verfahren nach einem der Ansprüche 1 bis 16, **dadurch gekennzeichnet**, daß eine argonhaltige Fraktion (36) in eine Rohargonsäule (17) eingeleitet und an deren Kopf sauerstoffabgereichertes Argon (18) gewonnen wird, wobei ein Teil des sauerstoffabgereicherten Argons (18) in indirektem Wärmeaustausch (21) mit mindestens einem Teil des Heizmediums (11a) stromabwärts des indirekten Wärmeaustauschs (27) zur Beheizung des unteren Bereichs der Reinargonsäule (25) verflüssigt wird.

18. Verfahren nach einem der Ansprüche 1 bis 17, **dadurch gekennzeichnet**, daß das Heizmedium (11) aus dem unteren oder mittleren Bereich der beziehungsweise einer der Luftzerlegersäulen (9) abgezogen wird.

19. Verfahren nach Anspruch 18, **dadurch gekennzeichnet**, daß das Rektifiziersystem eine aus einer Drucksäule (8) und aus einer Niederdrucksäule (9) bestehende Doppelsäule (7) aufweist, wobei das Heizmedium aus dem unteren oder mittleren Bereich der Drucksäule (8) abgezogen wird.

20. Verfahren nach Anspruch 19, **dadurch gekennzeichnet**, daß im unteren Bereich der Drucksäule (8) anfallende Sumpfflüssigkeit (11) als Heizmedium verwendet wird.

21. Verfahren nach einem der Ansprüche 1 bis 20, **dadurch gekennzeichne**t, daß im wesentlichen die gesamte im unteren Bereich der Drucksäule (8) anfallende Sumpfflüssigkeit als Heizmedium (11) verwendet wird.

22. Vorrichtung zur Durchführung des Verfahren nach einem der Ansprüche 1 bis 21 mit einem Rektifiziersystem mit mindestens einer Luftzerlegersäule (9) und einer Reinargonsäule (25), an die eine Zuführungsleitung (24) zur Einspeisung eines argonangereicherten Gemischs aus Luftgasen angeschlossen ist, wobei ein Wärmetauscher (27) mit dem unteren Bereich der Reinargonsäule (25) verbunden ist, **dadurch gekennzeichnet**, daß der Wärmetauscher (27) eine Flüssigkeitsleitung (11) zur Einspeisung eines flüssigen Heizmediums aufweist.

23. Vorrichtung nach Anspruch 22, **dadurch gekennzeichnet**, daß ein Wärmetauscher (29, 21') über eine Dampfleitung (28) und über eine Kondensatleitung (28a) mit dem oberen Bereich der Reinargonsäule (25) verbunden ist und eine Kühlmediumsleitung (11, 11b) aufweist und daß die Kühlmediumsleitung (11, 11b) mit einer Quelle für ein Kühlmedium, das einen Sauerstoffgehalt von mindestens 10 % aufweist, verbunden ist.

## Claims

1. Process for producing pure argon in which air is fractionated in a rectification system having at least one air fractionation column (9) and one pure argon column (25), wherein an argon-enriched mixture (24) of atmospheric gases is introduced into the pure argon column (25), an essentially nitrogen-free argon product (26) is taken off from the lower region of the pure argon column (25) and the lower region of the pure argon column (25) is heated by indirect heat exchange (27), characterized in that the indirect heat exchange (27) is carried out using a heating medium (11) which is in the liquid state.

2. Process according to Claim 1, characterized in that the overhead fraction (28) of the pure argon column (25) is at least partially liquefied by indirect heat exchange (29, 21', 29'') with a vaporizing cooling medium (11, 11b, 30) which has an oxygen content of at least 10% and the condensate (28a), formed in the indirect heat exchange (29, 21', 29'') with the cooling medium is recirculated to the pure argon column.

3. Process according to Claim 2, characterized in that the cooling medium (11) is taken off from the lower or central region of the air fractionation column or one of the air fractionation columns (9).

4. Process according to Claim 3, characterized in that the rectification system has a double column (7) consisting of a pressure column (8) and a low-pressure column (9), wherein the cooling medium is taken off from the lower or central region of the pressure column (8).

5. Process according to Claim 4, characterized in that bottoms liquid (11) occurring in the lower region of the pressure column (8) is used as cooling medium.

6. Process according to one of Claims 2 to 5, characterized in that an argon-containing fraction is introduced into a crude argon column (17) and at the top thereof oxygen-depleted argon (18) is produced, wherein a part of the oxygen-depleted argon (18) is liquefied in indirect heat exchange (21, 21') with the same cooling medium (11) which is used in the indirect heat exchange (29, 21', 29'') for the partial condensation of the overhead fraction (28) of the pure argon column (25), and wherein this indirect heat exchange (21, 21') is carried out in a condenser-evaporator (35), into the vaporization side of which is fed the cooling medium (11) against which the overhead traction (28) of the pure argon column (25) is also at least partially liquefied.

7. Process according to Claim 6, characterized in that the cooling medium (11b) is brought into indirect heat exchange (29) with the overhead fraction (28) of the pure argon column (25) upstream of the feed into the condenser/evaporator (35).

8. Process according to Claim 6 or 7, characterized in that the indirect heat exchange (21', 29'') between the cooling medium (11) and the overhead fraction (28) of the pure argon column (25) is carried out within the condenser/evaporator (35).

9. Process according to Claim 4 and according to one of Claims 6 to 8, characterized in that vaporized cooling medium (40) is taken off from the vaporization side of the condenser/evaporator (35) and is fed to the low-pressure column (9) at an intermediate point corresponding to its composition.

10. Process according to Claim 4 and according to one of Claims 6 to 9, characterized in that a larger amount of the cooling medium (11) is passed into the condenser/evaporator than is required for liquefying the overhead fractions (18, 28) from crude argon column (17) and pure argon column (25), and in that cooling medium (22, 22', 22'') which has remained in the liquid state is taken off from the vaporization side of the condenser/evaporator (35) and is fed to the low-pressure column (9) at an intermediate point corresponding to its composition.

11. Process according to Claim 9 and 10, characterized in that the cooling medium (22, 22', 22'') which has remained in the liquid state is fed into the low-pressure column (9) above the feed point of the vaporized cooling medium (40).

12. Process according to Claim 10 or 11, characterized in that essentially all of the bottoms liquid occurring in the lower region of the pressure column (8) is used as cooling medium (11).

13. Process according to one of Claims 10 to 12, characterized in that the cooling medium (22, 22', 22'') which has remained in the liquid state is taken off via an overflow apparatus (37, 22', 45).

14. Process according to one of Claims 6 to 13, characterized in that the vaporization side of the condenser/evaporator (35) is subdivided by a dividing wall (36) into a first (38) subspace and a second (39) subspace, wherein the gas and liquid spaces of the two subspaces (38, 39) communicate with one another, the cooling medium (11, 11a) is fed into the first subspace (38) which is in a heat-exchange relationship (29, 29'') with the overhead fraction (28) of the pure argon column (25), and wherein the second subspace (39) is in a heat-exchange relationship (21) with the oxygen-depleted argon (18) from the crude argon column (17).

15. Process according to Claim 14, characterized in that the cooling medium (22, 22'') which has remained in the liquid state is taken off from the first subspace (38) of the condenser/evaporator (35).

16. Process according to one of Claims 1 to 15, characterized in that the heating medium (11a) is at least in part brought into indirect heat exchange (29) with a gaseous fraction (28) from the top of the pure argon column (25) downstream of the indirect heat exchange (27) for heating the lower region of the pure argon column (25).

17. Process according to one of Claims 1 to 16, characterized in that an argon-containing fraction (36) is introduced into a crude argon column (17) and at the top thereof oxygen-depleted argon (18) is produced, wherein a part of the oxygen-depleted argon (18) is liquefied in indirect heat exchange (21) with at least a part of the heating medium (11a) downstream of the indirect heat exchange (27) for heating the lower region of the pure argon column (25).

18. Process according to one of Claims 1 to 17, characterized in that the heating medium (11) is taken off from the lower or central region of the air fractionation column or one of the air fractionation columns (9).

19. Process according to Claim 18, characterized in that the rectification system has a double column (7) consisting of a pressure column (8) and a low-pressure column (9), wherein the heating medium is taken off from the lower or central region of the pressure column (8).

20. Process according to Claim 19, characterized in that bottoms liquid (11) which occurs in the lower region of the pressure column (8) is used as heating medium.

21. Process according to one of Claims 1 to 20, characterized in that essentially all of the bottoms liquid occurring in the lower region of the pressure column (8) is used as heating medium (11).

22. Apparatus for carrying out the process according to one of Claims 1 to 21 having a rectification system having at least one air fractionation column (9) and one pure argon column (25) to which is attached a feedline (24) for feeding an argon-enriched mixture of atmospheric gases, wherein a heat exchanger (27) is connected to the lower region of the pure argon column (25), characterized in that the heat exchanger (27) has a liquid line (11) for feeding in a liquid heating medium.

23. Apparatus according to Claim 22, characterized in that a heat exchanger (29, 21') is connected via a vapour line (28) and via a condensate line (28a) to the upper region of the pure argon column (25) and has a cooling medium line (11, 11b) and in that the cooling medium line (11, 11b) is connected to a source of a cooling medium which has an oxygen content of at least 10%.

## Revendications

1. Procédé pour l'extraction de l'argon pur, dans lequel de l'air est fractionné dans un système de rectification avec au moins une colonne de fractionnement d'air (9) et une colonne d'argon pur (25), un mélange de gaz d'air, concentré en argon (24) étant introduit dans la colonne d'argon pur (25), un produit d'argon (26) essentiellement exempt d'azote étant soutiré de la zone inférieure de la colonne d'argon pur (25) et la zone inférieure de la colonne d'argon pur (25) étant chauffée par échange de chaleur indirect (27), caractérisé en ce que l'échange de chaleur indirect (27) est réalisé avec un milieu de chauffage (11) qui se trouve à l'état liquide.

2. Procédé suivant la revendication 1, caractérisé en ce que la fraction de tête (28) de la colonne d'argon pur (25) est liquéfiée au moins partiellement par échange de chaleur indirect (29, 21', 29'') avec un milieu de refroidissement s'évaporant (11, 11b, 30), qui présente une teneur en oxygène d'au moins 10% et en ce que le condensat formé (28a) lors de l'échange de chaleur indirect (29, 21', 29'') avec le milieu de refroidissement est ramené dans la colonne d'argon pur.

3. Procédé suivant la revendication 2, caractérisé en ce que le milieu de refroidissement (11) est soutiré de la zone inférieure ou centrale de la ou, selon le cas, d'une des colonnes de fractionnement d'air (9).

4. Procédé suivant la revendication 3, caractérisé en ce que le système de rectification présente une colonne double (7) constituée d'une colonne de pression (8) et d'une colonne de basse pression (9), le milieu de refroidissement étant soutiré de la zone inférieure ou centrale de la colonne de pression (8).

5. Procédé suivant la revendication 4, caractérisé en ce que le liquide de bas de colonne se présentant dans la zone inférieure de la colonne de pression (8) est utilisé comme milieu de refroidissement.

6. Procédé suivant l'une des revendications 2 à 5, caractérisé en ce qu'une fraction contenant de l'argon est introduite dans une colonne d'argon brut (17) et en tête de laquelle de l'argon appauvri en oxygène (18) est extrait, une partie de l'argon appauvri en oxygène (18) étant liquéfié en échange de chaleur indirect (21, 21') avec le même milieu de refroidissement (11), qui est utilisé lors de l'échange de chaleur indirect (29, 21', 29'') pour la condensation partielle de la fraction de tête (28) de la colonne d'argon pur (25), et cet échange de chaleur indirect (21, 21') étant réalisé dans un condenseur-évaporateur (35), lequel est alimenté du côté évaporateur en milieu de refroidissement (11) par rapport auquel la fraction de tête (28) de la colonne d'argon pur (25) est aussi au moins partiellement liquéfiée.

7. Procédé suivant la revendication 6, caractérisé en ce que le milieu de refroidissement (11b) est amené en amont de l'alimentation dans le condenseur-évaporateur (35) en échange de chaleur indirect (29) avec la fraction de tête (28) de la colonne d'argon pur (25).

8. Procédé suivant la revendication 6 ou 7, caractérisé en ce que l'échange de chaleur indirect (21', 29'') est réalisé à l'intérieur du condenseur-évaporateur (35) entre le milieu de refroidissement (11) et la fraction de tête (28) de la colonne d'argon pur (25).

9. Procédé suivant la revendication 4 et suivant l'une des revendications 6 à 8, caractérisé en ce que le milieu de refroidissement évaporé (40) est soutiré du côté évaporateur du condenseur-évaporateur (35) et amené dans la colonne de basse pression (9) à une position intermédiaire correspondant à sa composition.

10. Procédé suivant la revendication 4 et l'une des revendications 6 à 9, caractérisé en ce qu'une plus grande quantité du milieu de refroidissement (11) est introduite dans le condenseur-évaporateur, qu'il est nécessaire pour la liquéfaction des fractions de tête (18, 28) de la colonne d'argon brut (17) et de la colonne d'argon pur (25), et en ce que le milieu de refroidissement resté liquide (22, 22',22'') est soutiré du côté évaporateur du condenseur-évaporateur (35) et est amené dans la colonne de basse pression (9) à une position intermédiaire correspondant à sa composition.

11. Procédé suivant la revendication 9 et 10, caractérisé en ce que le moyen de refroidissement resté liquide (22, 22', 22'') est introduit au-dessus de la position de l'amenée du milieu de refroidissement évaporé (40) dans la colonne de basse pression (9).

12. Procédé suivant la revendication 10 ou 11, caractérisé en ce qu'essentiellement la totalité du liquide de bas de colonne se présentant dans la zone inférieure de la colonne de pression (8) est utilisé comme milieu de refroidissement (11).

13. Procédé suivant l'une des revendications 10 à 12, caractérisé en ce que le milieu de refroidissement resté liquide (22, 22', 22'') est soutiré par un dispositif de débordement (37, 22', 45).

14. Procédé suivant l'une des revendications 6 à 13, caractérisé en ce que le côté évaporateur du condenseur-évaporateur (35) est subdivisé par une paroi de séparation (36) en un premier (38) et un deuxième (39) compartiments partiels, les compartiments de gaz et de liquide des deux compartiments partiels (38, 39) communiquant l'un avec l'autre, le milieu de refroidissement (11, 11a) étant introduit dans le premier compartiment partiel (38), qui est en relation d'échange de chaleur (29, 29'') avec la fraction de tête (28) de la colonne d'argon pur (25), et le deuxième compartiment partiel (39) étant en relation d'échange de chaleur (21) avec l'argon appauvri en oxygène de la colonne d'argon brut (17).

15. Procédé suivant la revendication 14, caractérisé en ce que le milieu de refroidissement resté liquide (22, 22'') est soutiré du premier compartiment partiel (38) du condenseur-évaporateur (35).

16. Procédé suivant l'une des revendications 1 à 15, caractérisé en ce que le milieu de chauffage (11a) est amené en aval de l'échange de chaleur indirect (27) pour le chauffage de la zone inférieure de la colonne d'argon pur (25), au moins partiellement en échange de chaleur indirect (29) avec une fraction gazeuse (28) de la tête de la colonne d'argon pur (25).

17. Procédé suivant l'une des revendications 1 à 16, caractérisé en ce qu'une fraction contenant de l'argon (46) est introduite dans une colonne d'argon brut (17) et de l'argon appauvri en oxygène est extrait à sa tête, une partie de l'argon appauvri en oxygène (18) étant liquéfiée par un échange de chaleur indirect (21) avec au moins une partie du milieu de chauffage (11a) en aval de l'échange de chaleur indirect (27) pour le chauffage de la zone inférieure de la colonne d'argon pur (25).

18. Procédé suivant l'une des revendications 1 à 17, caractérisé en ce que le milieu de chauffage (11) est soutiré de la zone inférieure ou centrale de la ou, selon le cas, d'une des colonnes de fractionnement d'air (9).

19. Procédé suivant la revendication 18, caractérisé en ce que le système de rectification présente une colonne double (7) constituée d'une colonne de pression (8) et d'une colonne de basse pression (9), le milieu de chauffage étant soutiré de la zone intérieure ou centrale de la colonne de pression (8).

20. Procédé suivant la revendication 19, caractérisé en ce que le liquide de bas de colonne (11) se présentant dans la zone intérieure de la colonne de pression (8) est utilisé comme milieu de chauffage.

21. Procédé suivant l'une des revendications 1 à 20, caractérisé en ce qu'essentiellement la totalité du liquide de bas de colonne se présentant dans la zone inférieure de la colonne de pression (8) est utilisé comme milieu de chauffage (11).

22. Dispositif pour la réalisation du procédé suivant l'une des revendications 1 à 21, avec un système de rectification avec au moins une colonne de fractionnement d'air (9) et une colonne d'argon pur (25), à laquelle une conduite d'amenée (24) est raccordée pour l'alimentation en un mélange de gaz d'air, concentré en argon, un échangeur de chaleur (27) étant relié à la zone inférieure de la colonne d'argon pur (25), caractérisé en ce que l'échangeur de chaleur (27) présente une conduite de liquide (11) pour l'alimentation en milieu de chauffage liquide.

23. Dispositif suivant la revendication 22, caractérisé en ce qu'un échangeur de chaleur (29, 21') est relié avec la zone supérieure de la colonne d'argon pur (25) par une conduite de vapeur (28) et par une conduite de condensat (28a) et présente une conduite de milieu de refroidissement (11, 11b), et en ce que la conduite de milieu de refroidissement (11, 11b) est relié à une source d'un milieu de refroidissement, qui présente une teneur en oxygène d'au moins 10%.
